# NOUVEAU FASCICULE DE BREVET EUROPEEN

(11) **EP 0 439 400 B2**
(45) Date de publication et mention de la décision concernant l'opposition: **17.04.2002**
(45) Mention de la délivrance du brevet: 02.11.1994
(21) Numéro de dépôt: 91400142.5
(22) Date de dépôt: 23.01.1991
(51) Int. Cl.: H04N 1/00

(54) **Appareil de bureau à deux dispositifs de traitement de documents**
Bürogerät mit zwei Dokumentverarbeitungseinrichtungen
Office apparatus comprising two document handling devices

(30) Priorité: 23.01.1990 FR 9000728
(43) Date de publication de la demande: 31.07.1991
(73) Titulaire: SOCIETE D'APPLICATIONS GENERALES D'ELECTRICITE ET DE MECANIQUE SAGEM, 75783 Paris Cédex 16 (FR)
(72) Inventeur: Khun, Alex, F-95430 Auvers s/Oise (FR)
(74) Mandataire: Bloch, Gérard

(56) Documents cités:
- DE-A- 3 540 443
- GB-A- 678 411
- US-A- 4 866 531
- PATENT ABSTRACTS OF JAPAN vol. 6, no. 111 (E-114)(989) 22 juin 1982,& JP-A-57 39668
- PATENT ABSTRACTS OF JAPAN vol. 7, no. 52 (E-162)(1197) 02 mars 1983,& JP-A-57 201370
- PATENT ABSTRACTS OF JAPAN vol. 6, no. 144 (E-122)(1022) 03 août 1982,& JP-A-57 67373
- PATENT ABSTRACTS OF JAPAN vol. 8, no. 115 (E-247)(1552) 29 mai 1984,& JP-A-59 28755
- PATENT ABSTRACTS OF JAPAN vol. 7, no. 170 (E-189)(1315) 27 juillet 1983,& JP-A-58 75956

## Description

La présente invention est relative à un appareil de bureau du type connu qui comprend deux dispositifs de traitement de documents, chacun d'entre eux étant entraînable pour déplacer, l'un par rapport à l'autre, un document traité et une tête de traitement.

L'invention s'applique ainsi, notamment, aux télécopieurs dans lesquels l'un des dispositifs de traitement est le dispositif d'analyse des documents dont le contenu est à émettre à distance, et l'autre est le dispositif d'impression des documents reçus. L'invention pourrait s'appliquer également à d'autres appareils de bureau comme des photocopieurs, par exemple.

On connait déjà de tels appareils, dans lesquels sont prévus deux moteurs, un pour chacun des dispositifs de traitement. Ceci permet de faire fonctionner ces dispositifs indépendamment l'un de l'autre. En effet, dans un télécopieur, le mode émission met en oeuvre uniquement l'analyse du document émis, le mode réception met en oeuvre uniquement l'impression du document reçu, tandis que le mode copie-locale met en oeuvre à la fois l'analyse du document à copier et l'impression du document copié.

La nécessité d'utiliser deux moteurs est néanmoins un facteur d'augmentation de l'encombrement et du coût de l'appareil.

On connaît par le document Patent Abstracts of Japan, vol 6, No.144 (E-122)(1022) 3 août 1982, & JP-A-57 67373 (Sanyo Denki) 23 avril 1982, un appareil du type comprenant deux dispositifs de traitement de documents, chacun eux étant entraînable pour déplacer, l'un par rapport à l'autre, un document traité et une tête de traitement, un seul des deux dispositifs de traitement étant entraînable à vide, ce dispositif comportant une roue d'entraînement de rouleaux d'entraînement en déplacement dudit document, appareil dans lequel il est prévu un unique moteur pour l'entraînement des deux dispositifs de traitement et des moyens de transmission, commandables par le sens de rotation du moteur, pour transmettre la force motrice dudit moteur soit seulement à ce dispositif de traitement, soit simultanément aux deux dispositifs de traitement et comportant des moyens unidirectionnels de transmission de la force motrice au dispositif de traitement non entraînable à vide et des moyens bidirectionnels de transmission de la force motrice au dispositif de traitement entraînable à vide, pour l'entraîner dans un sens indépendant du sens de rotation dudit moteur.

Dans l'appareil de ce document, du côté du dispositif entraînable à vide, les moyens de transmission de la force motrice comprennent deux roues libres, une seule étant prévue du côté du dispositif non entraînable à vide.

Par le document US-A-4866531, il est aussi connu un appareil, d'un type analogue, dans lequel, du côté, émission, qui comporte un dispositif toutefois non entrainable vide, les moyens de transmission de la force motrice ne comportent plus qu'une roue libre, mais en combinaison, précisément, avec une chaîne d'entraînement à vide, une seule roue libre étant aussi prévue du côté réception.

Tout comme les moteurs, les roues libres constituent un facteur d'augmentation de l'encombrement et du coût des appareils.

La présente invention vise donc à éliminer toute roue libre des moyens de transmission de la force motrice au dispositif entraînable à vide.

A cet effet, la présente invention concerne un appareil du type ci-dessus, caractérisé par le fait que les moyens bidirectionnels comprennent une roue montée sur un bras qui pivote librement autour de l'arbre du moteur, pour transmettre la force motrice à ladite roue d'entraînement du dispositif entraînable à vide par l'intermédiaire d'un premier ou d'un deuxième ensemble de roues selon le sens de rotation du moteur.

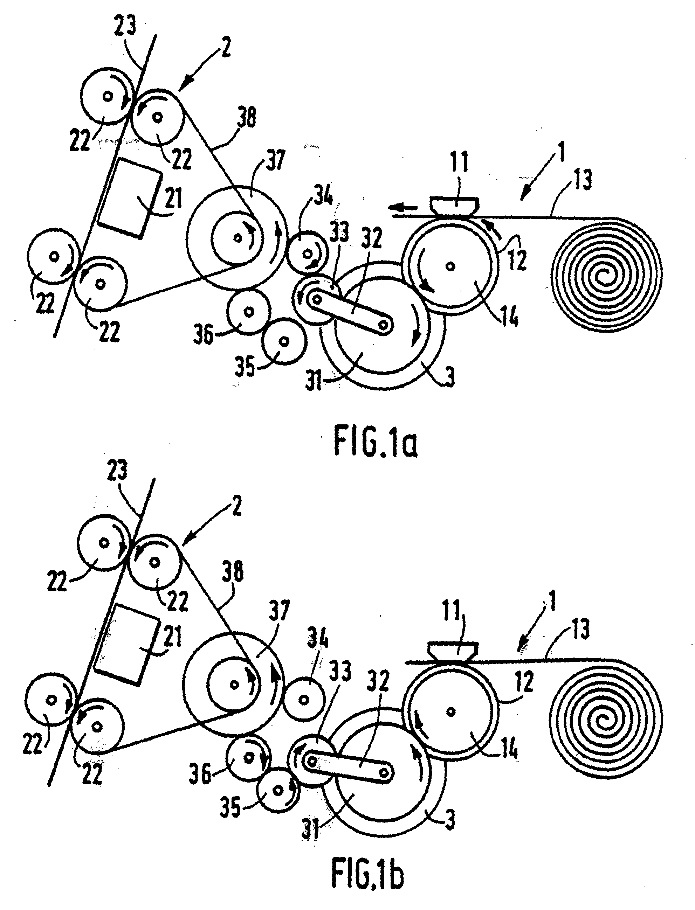

La présente invention sera mieux comprise à la lecture de la description suivante d'une forme de réalisation préférée de l'appareil de l'invention, faite en se référant aux figures 1a et 1b annexées qui représentent un schéma simplifié de l'appareil de bureau de l'invention, pour deux modes de fonctionnement, respectivement.

L'appareil de bureau décrit ci-après est ici un télécopieur comprenant deux dispositifs de traitement de document, un dispositif d'analyse des documents à émettre et un dispositif d'impression des documents reçus.

Le dispositif d'analyse est ici du type dans lequel le document à émettre est déplacé devant une tête d'analyse fixe qui analyse une ligne de pixels à la fois.

Le dispositif d'impression est ici du type dans lequel le document à imprimer est déplacé devant une tête d'impression fixe qui imprimé une ligne de pixels à la fois. Naturellement, il serait possible d'utiliser des dispositifs dans lesquels le document est maintenu fixe et la tête est déplacée le long de ce document.

Dans un cas comme dans l'autre, il est nécessaire d'entraîner mécaniquement chacun des dispositifs, pour déplacer, l'un par rapport à l'autre, le document traité et la tête de traitement. L'invention concerne l'entraînement de ces dispositifs.

Dans la forme de réalisation des figures 1, le dispositif d'impression 1 comprend une tête d'impression 11 et un rouleau 12 d'entraînement en déplacement d'une bande de papier vierge 13 destinée à devenir le document imprimé. Le rouleau 12 est tangent à la tête d'impression 11, le long de la zone active de celle-ci, et la bande de papier 13 est engagée entre le rouleau 12 et la tête d'impression 11.

Le dispositif d'analyse 2 comprend une tête d'analyse 21 et deux paires de rouleaux 22 d'entraînement en déplacement du document 23 à analyser. Les deux paires de rouleaux 22 sont disposées de part et d'autre de la tête d'analyse 21, chaque paire étant agencée à la manière d'un équipage de laminoir, entre lesquels s'engage le document 23.

II est à noter ici que le dispositif d'analyse 2 est entraînable à vide, alors que le dispositif d'impression 1 ne l'est pas. En effet, en l'absence de document 23, chacune des paires de rouleaux 22, sans contact avec la tête d'analyse, peut être entraînée sans qu'il en résulte le moindre dommage. Par contre, en l'absence de la bande de papier 13, le rouleau 12 frotte contre la tête 11, ce qui peut provoquer un blocage du rouleau 12, celui-ci étant le plus souvent recouvert de caoutchouc. Même si le rouleau 12 ne se bloque pas, le frottement sera à l'origine d'une usure de la tête d'impression 11 et du rouleau 12 qui fait qu'un entraînement à vide du dispositif d'impression 1 ne peut être toléré qu'exceptionnellement.

Un unique moteur 3 est prévu pour l'entraînement du dispositif d'impression 1 et du dispositif d'analyse 2.

Pour transmettre la force motrice du moteur 3 au dispositif d'impression 1, un dispositif unidirectionnel est prévu. Ce dispositif comprend essentiellement une roue dentée 31 solidaire de l'arbre de sortie du moteur 3, qui coopère avec une roue dentée 14, montée sur le rouleau à la manière d'une roue libre de bicyclette. Dans un souci de simplicité, les dents des roues 31 et 14, ainsi que celles des autres roues dentées, ne sont pas représentées sur les figures. Lorsque l'arbre de sortie du moteur 3 tourne dans le sens indiqué sur la figure 1a, la roue 14 entraîne le rouleau 12. Lorsque l'arbre de sortie du moteur tourne dans le sens contraire, indiqué sur la figure 1b, la roue 14 n'entraîne pas le rouleau 12 qui reste ainsi immobile.

Par contre, pour transmettre la force motrice du moteur 3 au dispositif d'analyse 2, un dispositif bidirectionnel est prévu, dans lequel le sens d'entraînement du dispositif d'analyse 2 est indépendant du sens de rotation du moteur 3.

A cet effet, il est ici prévu une roue dentée 33, montée folle sur un arbre parallèle à celui du moteur 3. L'arbre de la roue 33 est solidaire d'un bras 32 pivotant librement autour de l'arbre du moteur 3. La distance entre les deux arbres est égale à la somme des rayons des roues dentées 31 et 33, si bien que celles-ci coopèrent en permanence. Toutefois, du fait que le bras 32 pivote librement autour de l'arbre du moteur 3, l'axe de la roue 33 a tendance à se déplacer dans le sens dans lequel tourne la roue 31, à cause des frottements.

Ainsi, lorsque l'arbre de sortie du moteur 3 tourne dans le sens indiqué sur la figure 1a, l'arbre de la roue 33 se déplace dans le même sens, jusqu'à ce que la roue 33 rencontre une roue dentée 34 d'axe fixe avec laquelle elle coopère. La roue 34 coopère elle-même avec une roue 37 qui, par l'intermédiaire d'une courroie 38, entraîne les rouleaux 22.

Du fait que la force motrice est transmise de la roue 31 à la roue 37 par l'intermédiaire de l'ensemble des deux roues 33 et 34, le sens de rotation de la roue 37 est opposé au sens de rotation de la roue 31. Sur la figure 1a, où la roue 31 tourne dans le sens horaire, la roue 37 tourne donc dans le sens trigonométrique.

Par contre, lorsque l'arbre de sortie tourne dans le sens indiqué sur la figure 1b, opposé à celui de la figure 1a, l'arbre de la roue 33 se déplace dans le même sens, jusqu'à ce que la roue 33 rencontre une roue dentée 35 d'axe fixe, avec laquelle elle coopère. La roue 35 coopère avec une roue 36 qui coopère elle-même avec la roue 37.

Du fait que la force motrice est, dans ce cas, transmise de la roue 31 à la roue 37 par l'intermédiaire de l'ensemble des trois roues 33, 35 et 36, le sens de rotation de la roue 37 est le même que le sens de rotation de la roue 31. Sur la figure 1b, la roue 31 tourne dans le sens trigonométrique, et la roue 37 tourne donc aussi dans le sens trigonométrique, c'est-à-dire dans le même sens que celui de la figure 1a.

Pour utiliser l'appareil qui vient d'être décrit en mode "réception" ou en mode "copie locale", on commande le moteur 3 pour qu'il tourne dans le sens de la figure 1a. En mode "réception", le dispositif d'analyse est entraîné à vide, ce qui n'entraîne aucun dommage, tandis que le dispositif d'impression 1 imprime le document reçu sur la bande de papier 13. En mode "copie locale", le document à copier 23 est introduit dans le dispositif d'analyse, et il est recopié sur la bande de papier 13.

Pour utiliser l'appareil en mode "émission", on commande le moteur 3 pour qu'il tourne dans le sens de la figure 1b. Dans ce cas, le dispositif d'impression n'est pas entraîné et la bande de papier 13 n'avance pas. Par contre, le dispositif d'analyse entraîne le document 23 dont le contenu est analysé pour être émis à distance.

La forme de réalisation qui vient d'être décrite est dite "automatique" dans la mesure où le passage du mode de fonctionnement de la figure 1a à celui de la figure 1b est obtenu en commandant le sens de rotation du moteur 3, donc sans intervention manuelle lorsque, comme cela est le plus souvent le cas, le sens de rotation du moteur 3 est commandable électriquement.

## Revendications

1. Appareil de bureau comprenant deux dispositifs (1, 2) de traitement de documents, chacun d'eux étant entraînable pour déplacer, l'un par rapport à l'autre, un document traité (13, 23) et une tête de traitement (11, 21), un seul (2) des deux dispositifs de traitement (1, 2) étant entraînable à vide, ce dispositif comportant une roue (37) d'entraînement de rouleaux (22) d'entraînement en déplacement dudit document, appareil dans lequel il est prévu un unique moteur (3) pour l'entraînement des deux dispositifs de traitement (1, 2) et des moyens de transmission (31, 14, 32-38), commandables par le sens de rotation du moteur (3), pour transmettre la force motrice dudit moteur (3) soit seulement à ce dispositif de traitement (2), soit simultanément aux deux dispositifs de traitement (1, 2) et comportant des moyens unidirectionnels (31, 14) de transmission de la force motrice au dispositif de traitement (1) non entraînable à vide et des moyens bidirectionels (32-38) de transmission de la force motrice au dispositif de traitement (2) entraînable à vide, pour l'entraîner dans un sens indépendant du sens de rotation dudit moteur (3), appareil **caractérisé par le fait que** les moyens bidirectionnels comprennent une roue (33) montée sur un bras (32) qui pivote librement autour de l'arbre du moteur (3), pour transmettre la force motrice à ladite roue (37) d'entrainement du dispositif entraînable à vide (2) par l'intermédiaire d'un premier (33, 34) ou d'un deuxième (33, 35, 36) ensemble de roues selon le sens de rotation du moteur (3).

## Claims

1. Office machine comprising two devices (1, 2) for processing documents, each of the latter being able to be driven in order to move, one with respect to the other, a processed document (13, 23) and a processing head (11, 21), only one (2) of the two processing devices (1, 2) being able to be driven empty, this device comprising a wheel (37) for driving rollers (22) for driving said document into displacement, a machine in which there is provided a single motor (3) for driving the two processing devices (1, 2) and transmission means (31, 14, 32-38) able to be controlled by the direction of rotation of the motor (3), in order to transmit the driving force of said motor (3) either solely to this processing device (2), or simultaneously to the two processing devices (1, 2) and comprising unidirectional means (31, 14) for the transmission of the driving force to the processing device (1) which cannot be driven empty and bidirectional means (32-38) for the transmission of the driving force to the processing device (2) which can be driven empty, in order to drive it in a direction independent of the direction of rotation of said motor (3), machine **characterised by** the fact that the bidirectional means comprise a wheel (33) mounted on an arm (32) which pivots freely about the shaft of the motor (3), in order to transmit the driving force to said wheel (37) for driving the device (2) which can be driven empty through the intermediary of a first (33, 34) or a second (33, 35, 36) set of wheels according to the direction of rotation of the motor (3).

## Patentansprüche

1. Bürogerät, umfassend zwei Einrichtungen (1, 2) zur Verarbeitung von Dokumenten, von denen jede angetrieben werden kann, um ein verarbeitetes Dokument (13, 23) und einen Verarbeitungskopf (11, 21) im Verhältnis zueinander zu verschieben, wobei die eine (2) der beiden Verarbeitungseinrichtungen (1, 2) im leeren Zustand angetrieben werden kann, wobei diese Einrichtung ein Rad (37) aufweist für den Antrieb von Rollern (22) um die Verschiebung des sogennanten Dokuments anzutreiben, ein Gerät, bei dem ein einziger Motor (3) für den Antrieb der beiden Verarbeitungseinrichtungen (1, 2) sowie Mittel zur Kraftübertragung (31, 14, 32-38) vorgesehen sind, die durch die Drehrichtung des Motors (3) steuerbar sind, um die Triebkraft des Motors (3) entweder nur auf diese Verarbeitungseinrichtung (2) oder gleichzeitig auf beide Verarbeitungseinrichtungen (1, 2) zu übertragen, und die in einer Richtung wirkende Mittel (31, 14) zur Übertragung der Triebkraft auf die nicht leer antreibbare Verarbeitungseinrichtung (1) und in zwei Richtungen wirkende Mittel (32-38) zur Übertragung der Triebkraft auf die leer antreibbare Verarbeitungseinrichtung (2) aufweisen, um diese in einer Richtung unabhängig von der Drehrichtung des Motors (3) anzutreiben, ein Gerät, **dadurch gekennzeichnet, daß** die in zwei Richtungen wirkenden Mittel ein Rad (33) umfassen, das an einem Arm (32) angebracht ist, der frei um die Welle des Motors (3) schwenkt, um die Triebkraft je nach der Drehrichtung des Motors (3) mittels einer ersten (33, 34) oder einer zweiten (33, 35, 36) Gruppe von Rädern auf dieses Rad (37) für den Antrieb der leer antreibbaren Einrichtung (2) zu übertragen.
